(19) Europäisches Patentamt
European Patent Office
Office européen des brevets

(11) Veröffentlichungsnummer: **0 228 422 B1**

(12) **EUROPÄISCHE PATENTSCHRIFT**

(45) Veröffentlichungstag der Patentschrift: **29.01.92**

(51) Int. Cl.$^5$: **C08L 71/02**, C08L 33/02, C09K 9/02, B32B 17/10

(21) Anmeldenummer: **86904133.5**

(22) Anmeldetag: **19.06.86**

(86) Internationale Anmeldenummer: **PCT/EP86/00360**

(87) Internationale Veröffentlichungsnummer: **WO 86/07601 (31.12.86 86/28)**

Die Akte enthält technische Angaben, die nach dem Eingang der Anmeldung eingereicht wurden und die nicht in dieser Patentschrift enthalten sind.

# (54) GEL MIT TEMPERATURABHÄNGIGER LICHTDURCHLÄSSIGKEIT, VERFAHREN ZU SEINER HERSTELLUNG UND SEINE VERWENDUNG.

(30) Priorität: **20.06.85 DE 3522078**

(43) Veröffentlichungstag der Anmeldung: **15.07.87 Patentblatt 87/29**

(45) Bekanntmachung des Hinweises auf die Patenterteilung: **29.01.92 Patentblatt 92/05**

(84) Benannte Vertragsstaaten: **AT BE CH DE FR GB IT LI LU NL SE**

(56) Entgegenhaltungen:
**BE-A- 571 756**
**FR-A- 2 090 036**
**GB-A- 2 124 641**
**US-A- 2 710 274**
**US-A- 3 954 691**

**Chemical Abstracts, Volume 86, 1977, Columbus, Ohio (US) see page 63, abstract 172711z & JP - A - 77**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **MEINHARDT, Stefan**
**Grenzweg 17**
**W-7410 Reutlingen(DE)**

(74) Vertreter: **Kraus, Walter, Dr. et al**
**Patentanwälte Kraus, Weisert & Partner**
**Thomas-Wimmer-Ring 15**
**W-8000 München 22(DE)**

EP 0 228 422 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gel mit temperaturabhängiger Lichtdurchlässigkeit, ein Verfahren zu seiner Herstellung, seine Verwendung zur Herstellung von Bauelementen, insbesondere Mehrfachscheiben, Kunststoffdoppelscheiben oder Einzelscheiben, sowie Mehrfachscheiben, Kunststoffdoppelscheiben und Einzelscheiben, die das Gel enthalten.

Das Problem der Schattierungen von Glasflächen ist sehr alt. Schon lange versucht man, eine wirkungsvolle, möglichst automatische Schattierungseinrichtung herzustellen, die die Ausnutzung des Sonnenlichts im Winter zu Heizzwecken ermöglicht, die jedoch im Sommer verhindert, daß eine zu starke Erwärmung durch die Sonnenstrahlung stattfindet.

Bei den Polymeren in Wasserlösung sind zwei prinzipiell unterschiedliche Funktionssysteme bekannt:
Das erste Prinzip ist die temperaturabhängige Anlagerung von Wasser an Makromoleküle durch polare Wechselwirkung. Mit zunehmender Temperatur wird das polar gebundene Wasser abgespaltet und bildet im Kunststoff eine stark lichtstreuende Dispersion aus kleinsten Wassertröpfchen. Dieser Vorgang ist reversibel temperaturabhängig. Durch Beimischung unterschiedlicher Substanzen zum Kunststoff können dessen Eigenschaften, wie zum Beispiel die Temperatur, bei der die Wasserabspaltung eintritt, gezielt beeinflußt werden.

Das zweite Prinzip ist die temperaturabhängige Verfilzung von wasserlöslichen fadenförmigen Makromolekülen. Im Grundzustand sind die Makromoleküle als lange Ketten vollständig in Wasser gelöst. Ihr Durchmesser ist in diesem Zustand kleiner als die Wellenlänge des Lichtes. Mit zunehmender Temperatur tritt infolge der Molekülschwingung eine Verfilzung der Molekülketten ein, deren Abmessung größer ist als die Wellenlänge des Lichts. Einfallendes Licht wird an diesen Teilchen reflektiert oder absorbiert. Auch dieser Vorgang ist reversibel temperaturabhängig.

Aus der US-A-2 710 274 ist bekannt, daß Magnesiumpolyacrylat-Gel seine Lichtdurchlässigkeit in Abhängigkeit von der Temperatur reversibel ändert und daß durch Zugabe kleiner Mengen eines Alkohols oder Glykols die Senkung der Umschlagtemperatur bewirkt werden kann.

In der FR-A-2 090 036 werden 0,1 bis 10 gew.-%ige Lösungen von EO-Addukten beschrieben, die ebenfalls temperaturabhängige, reversible Lichtdurchlässigkeit bewirken und eingesetzt werden, um eine geregelte Beleuchtung eines Innenraumes zu erzielen. Entsprechend den Beispielen 1 und 2 dieser Druckschrift wird mit 1 gew.-%igen wässrigen Lösungen der handelsüblichen Polyoxyethylen-Polyoxypropylen- Polyoxyethylen Blockcopolymeren Pluronic® L 81 und L 101 gearbeitet.

Nach Journal of Colloid and Interface Science, Bd. 69, Nr. 2 (1979), S. 226 weisen 10%-ige wässrige Lösungen dieser beiden Produkte Trübungspunkte bei 20°C bzw. 15°C auf. In der Vorschrift zur Bestimmung der Trübungspunkte, Test Method MK395, ist angegeben, daß einige Produkte mit einem Ethylenoxidgehalt von unter 20% in destilliertem Wasser von 5°C gelöst werden müssen.

Der vorliegenden Erfindung liegt die Aufgabe zugrunde, ein Material, welches seine Lichtdurchlässigkeit reversibel in Abhängigkeit von der Temperatur ändert, zur Verfügung zu stellen. Das Material soll zur Herstellung von Schattierungseinrichtungen geeignet sein. Es soll insbesondere innerhalb eines großen Temperaturbereichs stabil und frostbeständig sein. Es soll auf einfache und wirtschaftliche Weise hergestellt werden können.

Erfindungsgemäß soll weiterhin ein Verfahren zur Herstellung des Materials zur Verfügung gestellt werden. Weiterhin sollen Verwendungsmöglichkeiten für Schattierungseinrichtungen in Mehrfachscheiben, Kunststoffdoppelscheiben und -folien oder Einzelscheiben aufgezeigt werden, die ihre Transparenz in Abhängigkeit von der Temperatur ändern und als Baumaterialien, beispielsweise bei Gewächshäusern, Industriebauten, Wohnhäusern und Sonderbauten, wie zum Beispiel in zoologischen Einrichtungen, verwendet werden können.

Gegenstand der Erfindung ist ein Gel, das seine Lichtdurchlässigkeit in Abhängigkeit von der Temperatur reversibel ändert, welches dadurch gekennzeichnet ist, daß es

(1) 2,5 bis 40 Gew.-% Polyetherverbindung mit Ehtylenoxidgruppen der allgemeinen Formel (I)

$$RO-(CH_2\overset{R^1}{\overset{|}{C}}HO)_n-H \qquad (I)$$

worin R eine n- oder iso-Butylgruppe bedeutet, $R^1$ ein Wasserstoffatom oder eine Methylgruppe bedeutet und n 3 bis 700 bedeutet, die durch Umsetzung von n- oder iso-Butanol mit einem Gemisch aus

Ethylenoxid und Propylenoxid im Verhältnis 1:1 in an sich bekannter Weise erhalten worden ist,

(2) 0 bis 25 Gew.-% Netzmittel auf der Grundlage von Nonylphenol, das 5 bis 10 Ethylenoxidgruppen im Molekül enthält,

(3) 2,5 bis 22,5 Gew.-% eines mit Wasser mischbaren Lösungsmittels aus der Gruppe Glycerin, Monoethylenglykol, Diethylenglykol, Triethylenglykol, Butandiol, Methanol, Ethanol, Benzylalkohol oder deren Gemische,

(4) 0,1 bis 2 Gew.-% Carboxyvinyl-Polymeres mit einem Molekulargewicht im Bereich von 250.000 bis 4.000.000,

(5) 0,05 bis 2 Gew.-% Base,

(6) 50 bis 60 Gew.-% Wasser und gegebenenfalls

(7) bis zu 2 Gew.-% übliche Zusatzstoffe enthält.

Gegenstand der Erfindung ist weiterhin ein Verfahren zur Herstellung dieses Gels, das dadurch gekennzeichnet ist, daß man die Komponenten (1), (2) und (3) mit der Komponente (6) unter Bildung eines flüssigen Gemisches vermischt, zu dem flüssigen Gemisch die Komponente (4) unter Mischen zugibt und das Gemisch anschließend mit der Komponente (5) und gegebenenfalls mit den Komponenten (7) versetzt und das erhaltene Reaktionsgemisch 2 bis 12 Stunden bei einer Temperatur von 5 bis 30 °C stehenläßt.

Die Erfindung betrifft weiterhin die Verwendung des oben beschriebenen Gels zur Herstellung von Schattierungselementen, insbesondere Bauelementen, die einen transparenten Träger, eine Gelschicht und gegebenenfalls eine zweite transparente Deckschicht auf der Gelschicht aufweisen. Vorzugsweise wird das Gel in einer Mehrfachscheibe, in einer Kunststoffdoppelscheibe oder auf einer Einzelscheibe verwendet.

Die Erfindung betrifft weiterhin Mehrfachscheiben, Kunststoffdoppelscheiben und Einzelscheiben, die das erfindungsgemäße Gel enthalten.

Überraschenderweise zeigte sich, daß das erfindungsgemäße Gel, welches ein Gemisch aus verschiedenen Verbindungen darstellt, die oben erwähnten Forderungen erfüllt und man es zur Herstellung einer Schattierungseinrichtung verwenden kann, die lange Zeit stabil ist, auf einfache Weise ohne anorganische Salze hergestellt werden kann und sehr wirksam ist.

Das erfindungsgemäße Gel enthält vorzugsweise 10 bis 25 Gew.-%, besonders bevorzugt 10 bis 15 Gew.-% Polyetherverbindung mit Ethylenoxidgruppen der allgemeinen Formel (I). Sie wird durch Umsetzung von n- oder iso-Butanol, vorzugsweise n-Butanol, mit einem Gemisch aus Ethylenoxid und Propylenoxid im Verhältnis von 1:1 erhalten. Die Polyetherverbindung ist somit ein Polyethylenoxid-Polypropylenoxid-Monobutylether. In der folgenden Reaktionsgleichung ist die Herstellung der Polyetherverbindung angegeben:

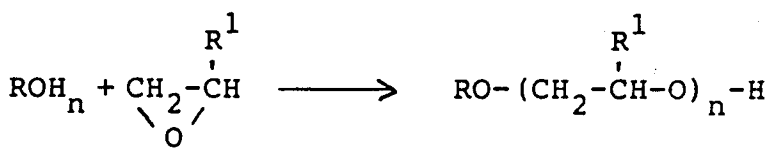

In der obigen Gleichung bedeutet R eine Butylgruppe, vorzugsweise eine n-Butylgruppe, $R^1$ bedeutet Wasserstoff oder eine Methylgruppe, und n bedeutet die Anzahl der für die Viskosität ausschlaggebenden Epoxybausteine, nämlich eine Zahl bis 700, vorzugsweise bis 200, besonders bevorzugt bis 50. Vorzugsweise liegt n im Bereich von 10 bis 30, besonders bevorzugt von 15 bis 20.

Als Basen können basisch wirkende Stoffe verwendet werden. Beispiele hierfür sind Amine, wie Triethylamin, Alkali- oder Erdalkalihydroxide, wie Natriunhydroxid oder Kaliumhydroxid. Man kann auch Gemische dieser Stoffe einsetzen.

Das im erfindungsgemäßen Gel gegebenenfalls enthaltene Netzmittel mit 5 bis 10 Ethylenoxidgruppen im Molekül auf der Grundlage von Nonylphenol ist durch die Gegenwart von hydrophilen und hydrophoben Anteilen nichtionisch grenzflächenaktiv. Beispiele für solche Netzmittel sind die Produkte, die von der Badischen Anilin- und Sodafabrik unter der Bezeichnung Lutensol® AP 5, -AP 6, -AP 7, -AP 8 etc. angeboten werden. Die Zahl nennt die Anzahl der Ethylenoxidmoleküle. Diese Produkte besitzen die folgenden, in den Tabellen I und II angegebenen Kenndaten.

## Tabelle I

Kenndaten der Lutensol®-AP-Marken

| Lutensol® | AP 6 | AP 7 | AP 8 | AP 9 | AP 10 | AP 14 | AP 20 |
|---|---|---|---|---|---|---|---|
| Lieferform | schwach gelbliche, klare Flüssigkeit | fast farblose, klare Flüssigkeit | fast farblose, klare Flüssigkeit | fast farblose, klare Flüssigkeit | fast farblose, klare Flüssigkeit | fast farblose Flüssigkeit | weißes, weiches Wachs |
| Ethoxylierungsgrad | ca. 6 | ca. 7 | ca. 8 | ca. 9 | ca. 10 | ca. 14 | ca. 20 |
| Gehalt (%) | ca. 100 | ca. 100 | ca. 100 | ca. 100 | ca. 100 | ca. 100 | ca. 100 |
| Dichte* (DIN 51757, g/cm³, 23 °C) | ca. 1,05 | ca. 1,04 | ca. 1,05 | ca. 1,05 | ca. 1,06 | ca. 1,05 (50 °C) | ca. 1,06 (50 °C) |
| Viskosität* (DIN 53015, mPa s, 23 °C) | ca. 350 | ca. 350 | ca. 350 | ca. 350 | ca. 350 | ca. 250 (30 °C) | – |
| Erstarrungspunkt* (°C) | unter –15 | unter –15 | ca. 0 | ca. 5 | ca. 10 | ca. 20 | – |
| Schmelzpunkt* (°C) | – | – | – | – | – | – | 35–40 |
| pH-Wert (1% in Wasser) | ca. 7 | ca. 7 | ca. 7 | ca. 7 | ca. 7 | ca. 7 | ca. 7 |
| Trübungspunkt (DIN 53917, °C) | | | | | | | |
| 1 g + 100 g Wasser | unter 20 | unter 20 | 32–36 | 48–52 | 58–63 | 92–96 | über 100 |
| 5 g + 25 g 25%ige BDG-Lösung | 61–65 | 61–65 | – | – | – | – | – |
| 1 g + 100 g Kochsalzlösung (50 g/l NaCl) | – | – | – | – | – | – | 83–88 |
| HLB-Werte* (Emulsionsvergleichsmethode) | ca. 11 | ca. 11 | ca. 12,5 | ca. 13 | ca. 13,5 | ca. 14,5 | ca. 16 |

*Die angegebenen Zahlen stellen Werte aus Durchschnittspartien dar. Ihre Einhaltung wird nicht laufend überwacht

## Tabelle II

Löslichkeit der Lutensol®-AP-Marken (10 %ig im Lösemittel bei 23 °C)

| Lutensol® | AP 6 | AP 7 | AP 8 | AP 9 | AP 10 | AP 14 | AP 20 |
|---|---|---|---|---|---|---|---|
| Destilliertes Wasser | O | O | + | + | + | + | - |
| Trinkwasser (Härte ca. 2,7 mmol Ca-Ionen/l, entsprechend ca. 15 °d) | O | O | + | + | + | + | + |
| 5 %ige Natronlauge | O | O | O | O | O | + | + |
| 5 %ige Salzsäure | O | O | + | + | + | + | + |
| 5 %ige Kochsalzlösung | O | O | + | + | + | + | + |
| Mineralöle | + | + | O | O | O | - | - |
| Alkohole | + | + | + | + | + | + | + |
| Aromatische Kohlenwasserstoffe | + | + | + | + | + | + | + |
| Chlorkohlenwasserstoffe | + | + | + | + | + | + | + |

+ = klar löslich  O = trüb löslich  - = unlöslich

Dazu analog gibt es bei den Chemischen Werken Hüls die Produktreihe Marlophen® 86, 87, 88 etc., wobei in der Nomenklatur die letzte Zahl die Anzahl der Ethylenoxidgruppen nennt. Je geringer diese ist, um so niedriger ist der Trübungspunkt. Bis zu sechs Gruppen liegt der Trübungspunkt unter 4 °C, über zehn trübt das Gel über 50 °C.

Als mit Wasser mischbare Lösungsmittel werden erfindungsgemäß folgende Lösungsmittel verwendet:

| | |
|---|---|
| Glycerin | $CH_2(OH)-CH(OH)-CH_2(OH)$ |
| Monoethylenglykol | $HO-CH_2-CH_2-OH$ |
| Diethylenglykol | $HO-CH_2-CH_2-O-CH_2-CH_2-OH$ |
| Triethylenglykol | $HO-CH_2-CH_2-O-CH_2-CH_2-O-CH_2-CH_2-OH$ |
| Butandiol, zum Beispiel (1,2-Butandiol) | $CH_3-CH_2-CHOH-CH_2OH$ |
| Methanol | $CH_3OH$ |
| Ethanol | $C_2H_5OH$ |
| Benzylalkohol | $C_6H_5CH_2OH$ |
| Diglykol | (siehe Diethylenglykol) |

oder deren Gemische.

Als erfindungsgemäß vorgesehenes Carboxyvinyl-Polymeres kann die Reihe der verschiedenen Carbopol®-Typen eingesetzt werden. Diese sind Polyacrylsäuren mit einem Molekulargewicht zwischen 250.000 und 4.000.000, die bereits seit mehreren Jahren im kosmetischen und pharmazeutischen Bereich ein umfangreiches Einsatzgebiet haben. Das Carboxyvinylpolymere reagiert leicht sauer und liegt als weiches weißes Pulver vor. Derartige Produkte sind unter den Bezeichnungen CARBOPOL® 941, CARBOPOL® 939, CARBOPOL® 934 im Handel erhältlich.

Die Umschlagstemperaturen sind vom Verhältnis des Polyethers zum Netzmittel abhängig und werden von wasserlöslichen Lösungsmitteln unterstützt. Allgemein liegt die Umschlagtemperatur des Gels im Bereich von 5 bis 60 °C.

Beispiele mit verschiedenen Trübungstemperaturen:

| Trübungstemperatur | 23°C | 30°C |
|---|---|---|
| Gelgrundlage (siehe oben) | 50,0 | 75,0 |
| Polyetherverbindung mit n = 35 | 15,0 | 15,0 |
| Diglykol | 35,0 | 10,0 |

Das erfindungsgemäße Gel kann weiterhin bis zu 2 Gew.-% übliche Zusatzstoffe wie Konservierungsstoffe, antibakterielle Mittel und/oder Fungizide enthalten.

Die Herstellung des Gels erfolgt, indem man die Polyetherverbindung, gegebenenfalls das Netzmittel, das mit Wasser mischbare Lösungsmittel und Wasser vermischt und zu dem flüssigen Gemisch das Carboxyvinylpolymere und anschließend die Base und die anderen Zusatzstoffe zugibt. Es ist jedoch auch möglich, das Vinylcarboxycopolymere mit dem Netzmittel, der Base und dem Wasser zu vermischen und anschließend dazu das wasserlösliche Lösungsmittel und die Polyetherverbindung zuzugeben. Das Vermischen kann bei Temperaturen im Bereich von 5 bis 50°C durchgeführt werden, vorzugsweise bei Raumtemperatur, und es ist nicht erforderlich, das Gemisch zu erhitzen. Gegebenenfalls kann man aber auch zur Beschleunigung der Auflösung das Gemisch erhitzen. Verfährt man gemäß der zweiten Variante, erhält man ein Gel, welches man vorzugsweise während einer Zeit von 1 bis 20 Stunden, vorzugsweise 1 bis 12 Stunden, bei Raumtemperatur stehen läßt.

Das erfindungsgemäße Gel wird zur Herstellung von Bauelementen, die einen transparenten Träger, zum Beispiel eine durchsichtige Platte oder Folie, aufweisen, verwendet. Auf den transparenten Träger wird eine Schicht aus dem erfindungsgemäßen Gel, die normalerweise 0,1 bis 20 mm, vorzugsweise 0,2 bis 2,0 mm und besonders bevorzugt 0,2 bis 0,5 mm, dick ist, aufgetragen, und dann wird gegebenenfalls eine transparente Deckschicht auf die Gelschicht aufgetragen. Mit dem erfindungsgemäßen Gel können Einzelscheiben, Mehrfachscheiben und Kunststoffdoppelscheiben hergestellt werden, Baumaterialien, die beispielsweise bei Gewächshäusern, Industriebauten, Wohnhäusern und Sonderbauten, wie zum Beispiel in zoologischen Einrichtungen, verwendet werden können.

Die folgenden Beispiele erläutern die Erfindung.

B e i s p i e l 1

Gelgrundlage:

| | |
|---|---|
| 98,8 | Wasser |
| 0,8 | Vinylcarboxypolymer (Mol.Gew. ca. 1 500 000), z.B. Carbopol 934 |
| 0,2 | Tensid mit 6 Etylenoxidgruppen, z.B. Lutensol AP 6 |
| 0,2 | Triethylamin |
| 100,0 | |

Gelfertigprodukt: mit 28°C Trübungspunkt:

| | |
|---|---|
| 60,0 | Gelgrundlage |
| 15,0 | Polyetherverbindung mittelviskos mit n = 35 |
| 25,0 | Diglykol |
| 100,0 | |

Herstellverfahren: In das vorgelegte Wasser Carbopol 934 langsam zugeben und gründlich einrühren. Mit Lutensol AP 6 vermengen und das Gemisch durch die basische Komponente verdicken. Nach dem Ausgelieren von 2 bis 12 Stunden ist die Gelgrundlage zum Einstellen der Trübungstemperatur einsetzbar.

B e i s p i e l 2

Trübungspunkt: 28°C

| | |
|---|---|
| 15,0 | Polyetherverbindung, mittelviskos; (n = 35) |
| 0,1 | Tensid mit 6 Ethylenoxydgruppen |
| 0,3 | Vinylcarboxypolymer (Mol.Gew. 1 500 000) |
| 25,0 | Diglykol |
| 59,4 | Wasser |
| 0,2 | NaOH |
| 100,0 | |

Herstellung: Polyetherverbindung und Tensid gut gemischt vorlegen. Langsam Vinylcarboxypolymer einrühren und knollenfrei einmischen. Mit Wasser verdünnen und mit Diglykol versetzen. Das flüssige Gemisch alkalisch stellen und 2 bis 12 Stunden reifen lassen. Danach ist das Gel verarbeitbar.

Es zeigen:

Fig. 1a und Fig. 1b ein Funktionsschema der thermochemischen Wasseranlagerung an Makromoleküle zur Veränderung der Transparenz. Fig. 1a zeigt eine klare lichtdurchlässige Substanz, Brechungsindex 1,5, ähnlich Glas. Fig. 1b zeigt eine Wasserabspaltung bei höherer Temperatur, Änderung des Brechungsindex, Erhöhung der Strahlungsreflexion.

Fig. 2a und Fig. 2b ein Funktionsschema der temperaturabhängigen Molekülverfilzung zur Veränderung der Transparenz, wobei Fig. 2a klare lichtdurchlässige Fadenmoleküle zeigt und Fig. 2b bei höherer Temperatur knäuelbildende Moleküle über Lichtwellengröße (lichtundurchlässig) zeigt.

Fig. 3a, Fig. 3b und Fig. 3c ein Funktionsschema der Veränderung der Transparenz mit Substanzen auf Polyglykolbasis (langzeitinstabil).

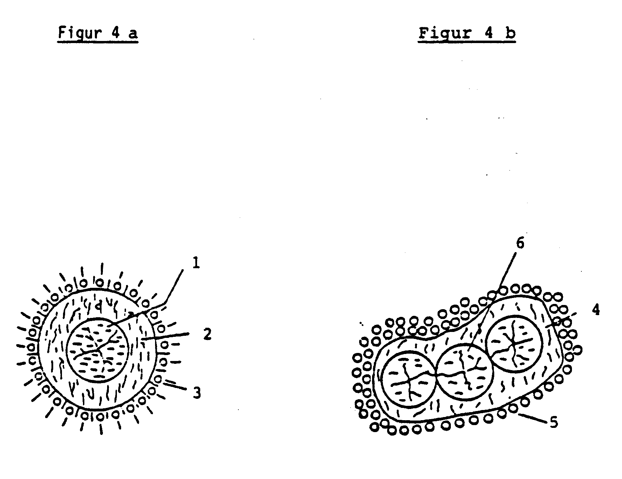

Fig. 4a und Fig. 4b das Funktionsschema des reversibel temperaturabhängig eintrübenden erfindungsgemäßen Polymerengemisches. In Fig. 4a ist die Gemischeinheit klar, in Fig. 4b eingetrübt. Es zeigen 1 ein Polyethergemisch in wäßriger Lösung, 2 Vinyl-Carboxy-Wassermischung (alkalisch ausgeliert), 3 Tensid zur Steuerung der Temperaturabhängigkeit der Reaktion, 4 Vinyl-Carboxy-Umhüllung mit Tensidanlagerung, 5 Wasserabspaltung und 6 Polyetherknäuel.

**Patentansprüche**

1. Gel, das seine Lichtdurchlässigkeit in Abhängigkeit von der Temperatur reversibel ändert, dadurch **gekennzeichnet,** daß es

   (1) 2,5 bis 40 Gew.-% Polyetherverbindung mit Ethylenoxidgruppen der allgemeinen Formel (I)

$$RO-(CH_2\overset{R^1}{\overset{|}{C}}HO)_n-H \qquad (I)$$

   worin R eine n- oder iso-Butylgruppe bedeutet, $R^1$ ein Wasserstoffatom oder eine Methylgruppe bedeutet und n 3 bis 700 bedeutet, die durch Umsetzung von n- oder iso-Butanol mit einem Gemisch aus Ethylenoxid und Propylenoxid im Verhältnis 1:1 in an sich bekannter Weise erhalten worden ist,

   (2) 0 bis 25 Gew.-% Netzmittel auf der Grundlage von Nonylphenol, das 5 bis 10 Ethylenoxidgruppen im Molekül enthält,

   (3) 2,5 bis 22,5 Gew.-% eines mit Wasser mischbaren Lösungsmittels aus der Gruppe Glycerin, Monoethylenglykol, Diethylenglykol, Triethylenglykol, Butandiol, Methanol, Ethanol, Benzylalkohol oder deren Gemische,

   (4) 0,1 bis 2 Gew.-% Carboxyvinyl-Polymeres mit einem Molekulargewicht im Bereich von 250.000 bis 4.000.000,

   (5) 0,05 bis 2 Gew.-% Base,

   (6) 50 bis 60 Gew.-% Wasser und gegebenenfalls

   (7) bis zu 2 Gew.-% übliche Zusatzstoffe enthält.

2. Gel nach Anspruch 1, dadurch **gekennzeichnet,** daß es 10 bis 25 Gew.-%, insbesondere 10 bis 15 Gew.-% Polyetherverbindung der allgemeinen Formel (I) enthält.

3. Verfahren zur Herstellung des Gels nach einem der Ansprüche 1 oder 2, dadurch **gekennzeichnet,** daß man die Komponenten (1), (2) und (3) mit der Komponente (6) unter Bildung eines flüssigen Gemisches vermischt, zu dem flüssigen Gemisch die Komponente (4) unter Mischen zugibt und das Gemisch anschließend mit der Komponente (5) und gegebenenfalls mit den Komponenten (7) versetzt und das erhaltene Reaktionsgemisch 2 bis 12 Stunden bei einer Temperatur von 5 bis 30 °C stehenläßt.

4. Verwendung des Gels nach einem der Ansprüche 1 oder 2 zur Herstellung von Bauelementen, die einen transparenten Träger, wie eine Platte oder Folie, eine Gelschicht und gegebenenfalls eine transparente Deckschicht auf der Gelschicht aufweisen.

5. Verwendung nach Anspruch 4, dadurch **gekennzeichnet,** daß das Gel zur Herstellung einer Mehrfachscheibe, einer Kunststoffdoppelscheibe oder eine Einzelscheibe verwendet wird.

6. Mehrfachscheibe, dadurch **gekennzeichnet,** daß sie aus mindestens zwei Glas- oder Kunststoffplatten mit einem Zwischenraum von mindestens 200 µm besteht, wobei der Zwischenraum mit dem Gel nach einem der Ansprüche 1 oder 2 gefüllt ist.

7. Einzelscheibe, dadurch **gekennzeichnet,** daß sie das Gel nach einem der Ansprüche 1 oder 2 aufweist und eine geeignete Deckschutzschicht enthält.

**Claims**

1. A gel which reversibly changes its permeability to light in dependence upon the temperature, characterised in that it contains
   (1) from 2.5 to 40% by weight of a polyether compound containing ethylene oxide groups, corresponding to the general formula (I)

$$RO-(CH_2\overset{\overset{R^1}{|}}{C}HO)_n-H \qquad (I)$$

   wherein R denotes and n- or iso-butyl group, $R^1$ denotes a hydrogen atom or a methyl group and n denotes a number from 3 to 700, obtained in known manner by the reaction of n- or iso-butanol with a mixture of ethylene oxide and propylene oxide in a ratio of 1:1.
   (2) from 0 to 25% by weight of wetting agent based on nonyl phenol, containing from 5 to 10 ethylene oxide groups in the molecule,
   (3) from 2.2. to 22.5 % by weight of a water miscible solvent selected from glycerol, monoethylene glycol, diethylene glycol, triethylene glycol, butanediol, methanol, ethanol, benzyl alcohol or mixtures thereof,
   (4) from 0.1 to 2 % by weight of carboxyvinyl polymer having a molecular weight in the range of from 250,000 to 4,000,000
   (5) from 0.05 to 2% by weight of base,
   (6) from 50 to 60 % by weight of water, and optionally
   (7) up to 2 % by weight of conventional additives.

2. Gel according to claim 1, characterised in that it contains from 10 to 25% by weight, in particular from 10 to 15 % by weight of polyether compound corresponding to the general formula (I).

3. A process for the preparation of the gel according to one of the claims 1 or 2, characterised in that components (1), (2) and (3) are mixed with component (6) to form a liquid mixture, component (4) is added to the liquid mixture and mixed therein, and component (5) and optionally component (7) are then added to the mixture and the reaction mixture obtained is left to stand at a temperature of from 5 to 30 °C for 2 to 12 hours.

4. Use of the gel according to one of the claims 1 or 2 for the production of structural elements having a transparent carrier such as a plate or film, a layer of gel and optionally a transparent covering layer on the layer of gel.

5. Use according to claim 4, characterised in that the gel is used for the production of a multiple pane, a plastics double pane or a single pane.

6. Multiple pane, characterised in that it consists of at least two glass or plastics plates with a gap between them of at least 200 µm, the gap being filled with the gel according to one of the claims 1 or 2.

7. Single pane, characterised in that it contains the gel according to one of the claims 1 or 2 and has a suitable protective covering layer.

**Revendications**

1. Gel modifiant de façon réversible sa translucidité en fonction de la température, caractérisé en ce qu'il contient

   (1) 2,5 à 40% en poids de composé polyéther à groupements oxyde d'éthylène de formule générale (I) :

   $$RO-(CH_2\overset{\overset{R^1}{|}}{C}HO)_n-H \qquad (I)$$

   dans laquelle R est un groupement n-butyle ou iso-butyle, $R^1$ un atome d'hydrogène ou un groupement méthyle et n est compris entre 3 et 700, lequel composé est obtenu de façon connue en soi par réaction entre le n-butanol ou l'iso-butanol et un mélange d'oxyde d'éthylène et d'oxyde de propylène dans le rapport 1 : 1,
   (2) 0 à 25% en poids d'agent mouillant à base de nonylphénol contenant 5 à 10 groupements oxyde d'éthylène dans sa molécule,
   (3) 2,5 à 22,5% en poids d'un solvant miscible à l'eau du groupe glycérol, monoéthylèneglycol, diéthylèneglycol, triéthylèneglycol, butanediol, méthanol, éthanol, alcool benzylique ou leurs mélanges,
   (4) 0,1 à 2% en poids de polymère carboxyle-vinyle de poids moléculaire compris dans la plage de 250 000 à 4 000 000,
   (5) 0,05 à 2% en poids de base,
   (6) 50 à 60% en poids d'eau et le cas échéant
   (7) un maximum de 2% en poids d'additifs usuels.

2. Gel selon la revendication 1, caractérisé en ce qu'il contient 10 à 25% en poids, notamment 10 à 15% en poids de composé polyéther de formule générale (I).

3. Procédé de fabrication du gel selon une des revendications 1 ou 2, caractérisé en ce qu'on mélange les composants (1), (2) et (3) avec le composant (6) en formant un mélange liquide, qu'on ajoute au mélange liquide le composant (4) en mélangeant et qu'on introduit ensuite dans le mélange le composant (5) et le cas échéant le composant (7) et qu'on laisse reposer le mélange réactionnel obtenu 2 à 12 h à une température comprise entre 5 et 30°C.

4. Utilisation du gel selon une des revendications 1 ou 2, pour la fabrication d'éléments de construction présentant un support transparent, tel qu'une plaque ou une feuille, une couche de gel et le cas échéant une couche de couverture transparente sur la couche de gel.

5. Utilisation selon la revendication 4, caractérisée en ce qu'on utilise le gel pour fabriquer une vitre multiple, une vitre double en matière plastique ou une vitre simple.

6. Vitre multiple, caractérisée en ce qu'elle est constituée par au moins deux plaques de verre ou de matière plastique séparées par un intervalle d'au moins 200 $\mu$m, l'intervalle étant rempli du gel selon l'une des revendications 1 ou 2.

7. Vitre simple, caractérisée en ce qu'elle présente le gel selon l'une des revendications 1 ou 2 et contient une couche protectrice de couverture appropriée.

Figur 1 a

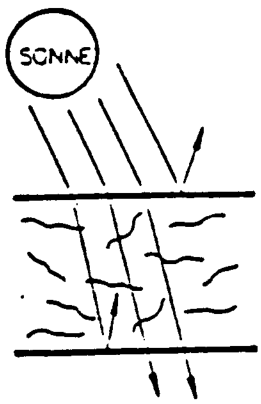


Figur 1 b

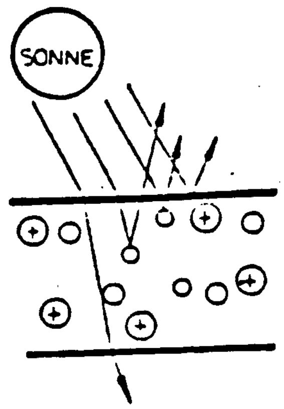


Figur 2 a

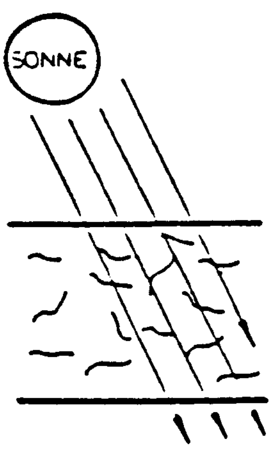


Figur 2 b

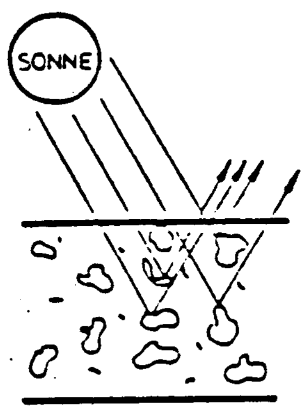

Figur 3 a

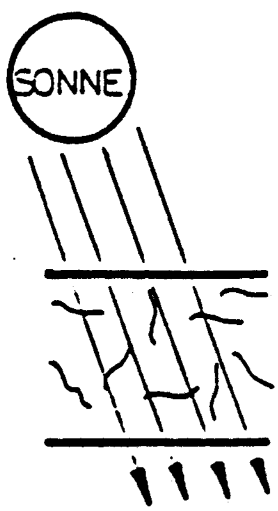


Polyglykol in $H_2O$ gelöst

Figur 3 b

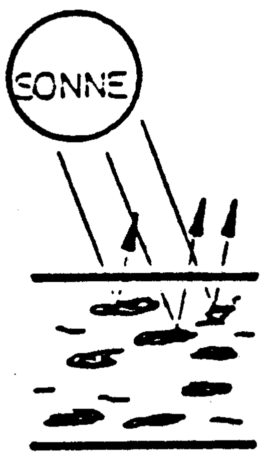


Trübung, reversibel, temperaturabhängig.

Figur 3 c

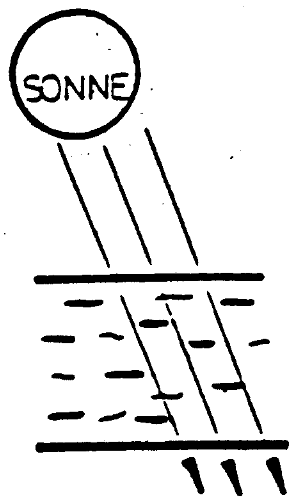


Zerstörung des Gels durch Elektrolyte, keine Trübung.

Figur 4 a

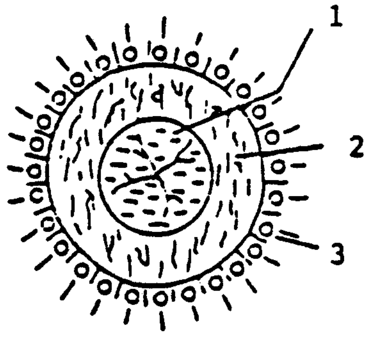


Figur 4 b